**Europäisches Patentamt**

**European Patent Office**

**Office européen des brevets**

(19)

(11) Veröffentlichungsnummer : **0 070 983**
**B1**

# (12) EUROPÄISCHE PATENTSCHRIFT

(45) Veröffentlichungstag der Patentschrift :
03.12.86

(21) Anmeldenummer : 82104122.5

(22) Anmeldetag : 12.05.82

(51) Int. Cl.⁴ : **C 08 J 7/04**, C 09 D 3/80,
C 09 K 3/16, C 09 K 3/18

(54) **Mittel zur Beschichtung von Objekten aus Kunststoff mit antistatischer und beschlagshindernder Wirkung und ihre Anwendung.**

(30) Priorität : 24.07.81 DE 3129262

(43) Veröffentlichungstag der Anmeldung :
09.02.83 Patentblatt 83/06

(45) Bekanntmachung des Hinweises auf die Patenterteilung : 03.12.86 Patentblatt 86/49

(84) Benannte Vertragsstaaten :
FR GB IT NL SE

(56) Entgegenhaltungen :
DE-A- 2 456 565

(73) Patentinhaber : Röhm GmbH
Kirschenallee Postfach 4242
D-6100 Darmstadt 1 (DE)

(72) Erfinder : Mönch, Theodor Peter
Wiesental 11
D-6114 Gross-Umstadt (DE)

EP 0 070 983 B1

## Beschreibung

Die Erfindung betrifft Mittel zur langwirksamen Beschichtung von Objekten aus Kunststoff mit antistatischer und beschlagshindernder Wirkung, die weitgehend wasserfest ist.

Wegen des hohen spezifischen Widerstands der Kunststoffe bilden sich auf Kunststoffoberflächen leicht elektrostatische Ladungen aus. In staubhaltiger Luft führt dies zur Anziehung der (geladenen) Staubteilchen und zur Verschmutzung von Kunststoffoberflächen. Zu den « hochaufladbaren » Werkstoffen (Oberflächenwiderstand > $10^{15}$ Ω) gehören z. B. Polyolefine, Polycarbonate, Polyvinylchlorid, Polymethylmethacrylat. Die Technik hat sich nachhaltig um die Lösung des Problems der statischen Aufladung bemüht und hat sowohl « innere » als « äußere » Antistatika zur Verfügung gestellt. « Innere » Antistatika sind Bestandteile der Kunststoff-Rezeptur. Äußere Antistatika trägt man — meist aus einer wäßrig-alkoholischen Lösung im Tauch- oder Sprühverfahren nach der Verarbeitung auf ; sie wirken zwar sofort, werden aber bereits durch Abwischen oder durch Abwaschen entfernt.

Die gebräuchlichen Antistatika fallen — abgesehen vom Ruß — in einige wenige Verbindungsklassen, nämlich
a) mehrwertige Alkohole und deren Äther ;
b) Fettsäureester ;
c) Amine und Säureamide ;
d) quarternäre Ammoniumsalze und
e) anionenaktive Antistatika,
wobei in der Regel ein oder mehrere langkettige Reste Bestandteile der Moleküle sind.

Auch das Benetzungsverhalten von Kunststoff-Oberflächen gegenüber Wasser hat sich in manchen Anwendungsbereichen als nicht problemlos erwiesen. Verschiedene Kunststoffe, darunter die Acrylate, weisen eine hohe Grenzflächenspannung zum Wasser auf und wirken daher wasserabweisend. Wasser bildet auf solchen Oberflächen keinen Film aus, sondern es werden Wassertröpfchen gebildet. Die hieraus resultierende Problematik sei am Beispiel von Gewächshäusern mit Kunststoff-Verglasung deutlich gemacht. Innerhalb solcher, mit Abdeckungen aus transparenten Kunststoffen ausgestatteten Gewächshäuser kommt es unter ganz normalen Anzuchtbedingungen zur Kondensation von Wasser auf der Innenseite der Verglasung. Durch die im Vergleich mit Silikatglas verstärkte Bildung von Wassertröpfchen wird zunächst einmal die Lichtdurchlässigkeit in erheblichem Maße reduziert, zum anderen wirkt der Tropfenfall zumindest störend ; bestimmte Pflanzenkulturen werden unweigerlich dadurch geschädigt, wenn nicht zerstört.

Es bestand unter einer Vielzahl von Anwendungsaspekten die Aufgabe, auf Kunststoffobjekten eine möglichst dauerhafte Beschichtung zu erzeugen, die eine antistatische Wirkung besitzt und das Beschlagen mit Flüssigkeitströpfchen, insbesondere Kondenswassertröpfchen zuverlässig verhindert.

Soweit es sich um transparente Kunststoffe handelt, kann auf die Forderung nach einer klardurchsichtigen Beschichtung die vom Auge nicht unmittelbar als solche wahrgenommen wird, nicht verzichtet werden, aber auch bei translucenten und opaken Kunststoffen ist es vorteilhaft, wenn die Beschichtung möglichst nicht in Erscheinung tritt.

Die Beschichtung der Oberflächen mit Materialien, die andere Eigenschaften haben als das Grundmaterial, gehört zu den Standardtechniken im Rahmen der Nachbehandlung von Kunststoffen. Die Beschichtung dient in der Regel dem Schutz gegen mechanische, chemische und witterungsbedingte Einflüsse.

Es ist auch bereits bekannt, Kunststoffoberflächen mit Netzmitteln oder auch mit Antistatikmitteln bzw. mit Beschlagschutzmitteln zu behandeln, die eine gleichmäßige Benetzung der Oberfläche bewirken, und einen klar-durchsichtigen Film zu bilden imstande sind. Die Beschlagsschutzbeschichtungen des Standes der Technik auf Acrylharzbasis sind in der Regel ganz oder überwiegend aus hydrophilen Monomeren wie z. B. den Hydroxyalkylestern der Acryl- oder der Methacrylsäure bzw. den Säuren selbst aufgebaut.

Aus der US-PS 4 105 809 sind beispielsweise Antibeschlagmittel für transparente Materialien auf der Basis eines Hydroxyethylmethacrylat-Triallylisocyanurat-Pfropf-Copolymeren und einer oberflächenaktiven nichtionischen Siliconverbindung bekannt. Die Beschichtung wird thermisch gehärtet, beispielsweise bei 150 °C.

In der Japan-OS 77 76 362 werden ebenfalls Antibeschlagmittel empfohlen, die ein Copolymer aus Acrylsäure, 1,4-Butylenglykoldimethacrylat und 2-Hydroxyethyl-methacrylat und sowohl ein nichtionisches Netzmittel mit niederem HLB-Wert als auch ein nichtionisches Netzmittel — beides Polyoxyethylene — mit hohem HLB-Wert enthalten. Nach dem Auftragen muß eine thermische Härtung (bei 130 °C) durchgeführt werden.

Die Japan-OS 75 01 710 beschreibt gleichfalls Antibeschlagmittel, wobei 2-Hydroxyethylmethacrylat in Gegenwart von Methylcellosolve polymerisiert wird, und zu einer Lösung des Polymers in Ethanol γ-Glycidoxypropyltrimethoxysilan gegeben wird. Nach dem Überziehen der Objekte wird thermisch gehärtet (bei 120 °C).

Die Beschichtung von Glas mit einem Copolymerisat aus β-Hydroxyethylmethacrylat und [γ-(Methacryloyloxy)propyl]-trimethoxysilan ist aus der DE-OS 20 51 832 bekannt.

Aus der US-PS 3 488 215 ist ein hydrophiler Überzug mit Antibeschlagwirkung aus Hydroxyalkylacrylat- bzw. Hydroxyalkylmethacrylat bekannt.

In der DE-OS 21 61 645 werden Beschichtungsmittel aus einem Kunststoff empfohlen, die zu 12-30 Gew.-% aus einem Monomeren mit einer Salzartigen Gruppe, zu 40-88 Gew.-% aus Estern der Acryl- und/oder Methacrylsäure und gegebenenfalls einer Vernetzungskomponente aufgebaut sind. Zur Erzielung einer hohen Wasserfestigkeit wird thermisch gehärtet.

Ebenfalls Systeme die thermisch gehärtet werden, sind Gegenstand der DE-OS 22 57 528. Sie können z. B. Polymere aus Polyacrylsäure, Hexamethoxymelamin und (3-Aminopropyl)triethoxysilan und Netzmittel enthalten.

Aus der Japan-OS 77 101 680 ist ein Mittel gegen das Beschlagen von Glas- und Kunststoffoberflächen bekannt, bei denen Polyacrylsäure zusammen mit Natriumalkylbenzolsulfonat und Silikon-Alkylenoxid-Copolymeren zur Anwendung kommen. Derartige Beschichtungen seien mehr als 5 Tage wirksam, verglichen mit anderen Antibeschlagmitteln, die höchstens ungefähr einen Tag wirken.

In neuester Zeit sind Antibeschlagmittel auf Basis von Glycidol-, Ethylenglykolmonomethacrylat-Silan-Polymeren bekannt geworden, die durch γ-Strahlung polymerisiert und bei ca. 100 °C gehärtet werden (vgl. Chem. Abstr. *93*, 187818).

In vielen Fällen macht sich die Erfordernis einer thermischen Härtung nach erfolgter Beschichtung in der Praxis als Hindernis bemerkbar. Dies gilt z. B. ebenso für die JP-A 77 76 362 als für die DE-A 24 56 565. Die Lehre der letztgenannten DE-A ist aus einer Reihe von Gründen mit der vorliegenden Erfindung unvereinbar : Sie konnte die vorliegende Lehre auch nicht nahelegen. Zunächst handelt es sich um nicht-wäßrige Lösungen von Polymerisaten, die selbst ein hygroskopisches Harz darstellen. Die hauptsächlich vorhandenen Monomeren sind folgerichtig hydrophile Substanzen. Weiter bedürfen die Überzugsmassen gemäß dieser Druckschrift 5 bis 70 Gew.-% eines externen Vernetzers mit einem einringigen oder kondensiertringigen carbo- oder heterocylischen Gerüst. Die Anwesenheit eines Härtungskatalysators erscheint unerläßlich. Der Zusatz eines oberflächenaktiven Mittels erhält seinen technologischen Sinn allein und ausschließlich auf Grund des Vorhandenseins des externen Vernetzers. Die gebildeten Überzugsfilme sind von solch substantieller Dicke, daß sie eine hohe Oberflächenhärte herbeiführen.

Die Mittel des Standes der Technik vermögen in verschiedener Hinsicht nicht zu befriedigen. Die gebildeten Oberflächenfilme sind in aller Regel nicht wasserfest ; sie werden nach relativ kurzer Dauer vom Wasser abgespült. Zur Aufrechterhaltung der Beschichtung wäre man gezwungen, die Beschichtung in kurzen Abständen zu wiederholen. Aus der Sicht der Praxis wäre eine solche Behandlung zu aufwendig. Meist handelt es sich bei den Polymerisaten um Spezialentwicklungen, die sich nicht so kostengünstig herstellen lassen. Für die Vielzahl von Anwendungsbereichen ist eine thermische Härtung nach der Beschichtung der Substrate technisch schwierig bis undurchführbar.

Es wurden Mittel zur flächigen und langwirksamen Beschichtung der Oberflächen von Objekten aus Kunststoff mit antistatischer und beschlagverhindernder Wirkung in Form von

A) einer wäßrigen Dispersion eines Acrylharzes gefunden mit einer $T_{\lambda max}$ von $\geq 10$ °C, vorzugsweise 10-50 °C, die höchstens 10 Gew.-%, bezogen auf das gesamte Acrylharz an wasserlöslichen Monomeren als Comonomere enthalten soll, wobei höchstens die Hälfte (gewichtsmäßig) davon aus nicht-stickstoffhaltigen, wasserlöslichen Monomeren bestehen soll, und wobei die Dispersion eine MFT $\geq 5$ °C, vorzugsweise 5-20 °C, besitzt, die

B) nichtionische und/oder anionische Tenside und gegebenenfalls

C) ein Entschäumungsmittel, sowie gegebenenfalls

D) einen oder mehrere Alkohole enthält.

Die erfindungsgemäßen Mittel eignen sich besonders zur Beschichtung thermoplastischer und thermoelastischer Kunststoffe. Sie sind besonders wertvoll zur Beschichtung von transparenten Kunststoffen (organischen Gläsern).

Besonders genannt seien als Substrate die Acrylatkunststoffe, insbesondere die Acrylgläser, speziell auf Basis von Methylmethacrylat, sowie Copolymerisate desselben, beispielsweise mit weiteren Acryl- und/oder Methacrylsäureestern, Styrol und dessen Derivaten, Polymerisatgemische usw. (vgl. Esser-Vieweg, Kunststoffhandbuch, Band IX, Carl Hanser, München, 1975), weiter Polyvinylchlorid, Polystyrol.

Die erfindungsgemäß zu verwendenden Acrylharzdispersionen A) besitzen vorzugsweise eine hohe Alterungsbeständigkeit und Gilbungsresistenz. So soll der Transmissionsgrad (in %), der mit dem erfindungsgemäßen Mittel erzeugten Beschichtung auf Kunststoffoberflächen (s. Beispiel) nach 150-stündiger UV-Belichtung (Xenontest lt. DIN 53 387) 90 % betragen.

Bevorzugt sind Acrylharzdispersionen auf der Basis von

a) wasserunlöslichen Estern der Acryl- und/oder Methacrylsäure, insbesondere mit $C_1$-$C_4$-Alkoholen und mit 2-Äthylhexanol, vorzugsweise $C_2$ und/oder $C_4$-Alkoholen, genannt seien insbesondere der Methyl-, Äthyl, n-Butyl- und 2-Äthylhexylacrylsäureester, sowie Methyl- und n-Butylmethacrylsäureester als Homo- oder als Copolymerisate, vorzugsweise als Copolymerisate, und

b) gegebenenfalls weiterer Comonomere, die nicht dem Acrylattyp angehören wie Vinylester von Fettsäuren, insbesondere Vinylacetat, Styrol und dessen Derivate,

c) und die in Anteilen von 0 bis 10 Gew.-%, bezogen auf das Gesamtpolymerisat (Acrylharz) noch mit hydrophilen (wasserlöslichen) Monomeren α) vom Typ der OH- oder aminogruppenhaltigen Derivate, z. B. Hydroxyalkylestern von α,β-ungesättigten, polymerisationsfähigen Mono- oder Dicarbonsäuren, vorzugsweise der Acryl- und/oder der Methacrylsäure, insbesondere dem 2-Hydroxyäthylacrylat oder -methacrylat und/oder den 2-Dialkylaminoalkylestern der Acryl- und/oder der Methacrylsäure, Vinylpyrrolidon und/oder β) den (gegebenenfalls N-substituierten) Amiden der Acryl- und/oder der Methacrylsäure, insbesondere dem Acrylamid oder dem Methacrylamid und/oder γ) polymerisationsfähigen Säuren wie der Acrylsäure, Methacrylsäure, Itakonsäure, Maleinsäure, Fumarsäure, Crotonsäure,

d) gegebenenfalls in Anteilen bis zu 5 Gew.-%, bezogen auf das Acrylharz, mit vernetzungsfähigen Monomeren, die ihren hydrophilen Charakter beim Vernetzen verlieren, insbesondere vernetzungsfähigen Monomeren vom Typ des N-Methylolacrylsäure- und/oder N-Methylolmethacrylsäureamids, copolymerisiert sein können.

Der Anteil der Komponenten a) plus b) am Gesamtpolymerisat der erfindungsgemäßen Acrylharzdispersion beträgt 90-100 Gew.-%, vorzugsweise 95-100 Gew.-%. Der Anteil der Komponente b) kann 0 bis 70 Gew.-%, vorzugsweise 0 bis 55 Gew.-%, bezogen auf das Acrylharz, ausmachen. Die allein auf der Basis der Monomeren vom Typ a) oder vom Typ a) plus b) gebildeten Dispersionen A) sind bereits gut geeignet im Sinne der vorliegenden Erfindung. Durch Einbau hydrophiler Gruppen kann die Haftfestigkeit in gewissem Umfang unterstützt werden. Der Anteil der Komponente c) kann definitionsgemäß 0 bis 10 Gew.-%, vorzugsweise 0 bis 5 Gew.-%, bezogen auf das Acrylharz, ausmachen ; der Anteil der unter die Komponente c) fallenden wasserlöslichen Monomeren vom Typ β) (unsubstituierte Amide) wird im allgemeinen 5 Gew.-% nicht überschreiten.

Der Anteil der hydrophilen Monomeren des Typs α) liegt in der Regel unterhalb von 5 Gew.-%, bezogen auf das Gesamtpolymerisat, vorzugsweise im Bereich von 0 bis 3 Gew.-%.

Der Anteil der Monomeren vom Typ γ) hält sich im allgemeinen im Bereich von 0 bis 2 Gew.-%.

Die Herstellung der erfindungsgemäß zu verwendenden Dispersionen ist an sich bekannt (vgl. H. Rauch-Puntigam, T. Völker in « Acryl- und Methacrylverbindungen », Springer-Verlag, 1967).

Sie können z. B. durch Batch-Polymerisation oder bevorzugt durch Zulauf-Polymerisation hergestellt werden.

Bei der Batch-Polymerisation wird der gesamte Polymerisationsansatz, der die Monomeren, das Wasser und die Hilfsstoffe wie Emulgatoren, Schutzkolloide, Initiatoren und gegebenenfalls Redoxkomponenten, Regler usw. enthält, im allgemeinen als Emulsion in dem Emulsionsreaktor vorgelegt und die Reaktion thermisch durch Temperaturerhöhung und/oder durch Zugabe einer Redoxkomponente gestartet. Zur besseren Abführung der Reaktionswärme kann es sich als zweckmäßig erweisen, die Batch-Polymerisation in nacheinander durchzuführende Teilschritte zu unterteilen.

Bei der an sich bevorzugten Zulaufpolymerisation wird im allgemeinen zu einer Vorlage aus einem Teil des Wassers, des Initiators und des Emulgators eine Emulsion aus den Monomeren im restlichen Wasser zusammen mit dem restlichen Initiator, Emulgator und gegebenenfalls weiteren Hilfsstoffen in einer Weise zugegeben, daß die Wärme in jeder Phase der Polymerisation gut abgeführt werden kann. Als Variante ist es möglich, in eine Vorlage des gesamten Wassers, das auch das Hilfsstoffsystem enthält, nur die Monomeren zulaufen zu lassen. Nach Beendigung der Reaktion können alle genannten Dispersionen noch mit weiteren Hilfsstoffen konfektioniert werden, man kann beispielsweise weitere Emulgatoren, Filmbildehilfsmittel und Entschäumer hinzusetzen.

Besonders vorteilhafte Ausführungsformen für die Herstellung von erfindungsgemäß verwendbaren Dispersionen sind z. B. in den DE-OS 18 04 159, DE-PS 1 910 488 oder DE-AS 1 910 532 angegeben werden.

Die Teilchengröße der Dispersionen ist für die erfindungsgemäße Anwendung in der Regel nicht kritisch, sofern sie sich in dem für Dispersionen üblichen Bereich (etwa zwischen 20 und 600 nm) bewegt. Kleinere Teilchen (zwischen 20 und 200 nm) können jedoch in manchen Fällen optische Vorteile bringen.

Für die Anwendung auf transparenten Materialien besonders geeignet sind Dispersionen, deren Polymerisat sich im Brechungsindex möglichst wenig vom Brechungsindex des beschichteten Substrats unterscheidet.

Als nichtionische und/oder anionische Tenside gemäß Komponente B) der erfindungsgemäßen Mittel kommen insbesondere solche mit einem HLB-Wert von > 5, vorzugsweise > 10 in Betracht.

(Zur Definition des HLB-Wertes vgl. Römpp's Chemie-Lexikon, 7. Auflage, Frankh'sche Verlagshandlung, Stuttgart, 1973) Genannt seien z. B. aliphatische und aromatisch-aliphatische Sulfonate wie z. B. Tetrapropylensulfonat, Alkylbenzolsulfonate wie z. B. die Handelsprodukte BASOPALE® der BASF, MARLOPON® der Hüls GmbH, oder Alkylphenolpolyglykoläther wie MARLOPHENE® oder Fettalkoholpolyglykoläther wie die MARLOPALE® der Hüls GmbH.

Als Entschäumungsmittel, die gegebenenfalls als Komponente C) in den erfindungsgemäßen Dispersionen vorhanden sein können, kommen z. B. solche auf Basis höherer Alkohole, solche auf Basis von Ölen pflanzlichen oder mineralischen Ursprungs- oder auf Siliconbasis, wie z. B. das Produkt Nopco NX 2 infrage.

Definitionsgemäß besitzen die Dispersionen der vorliegenden Erfindung eine maximale Filmbildungstemperatur (MFT nach DIN 53 787) von ⩾ 5 °C, vorzugsweise von 5 bis 20 °C, und eine $T_{\lambda max}$ von ⩾ 10 °C (nach DIN 53 445) vorzugsweise von 10-50 °C.

Als Alkoholkomponente D) die gleichfalls in der erfindungsgemäßen Dispersion anwesend sein kann, seien $C_1$-$C_4$-Alkohole, wie Äthanol, Isopropanol, Butanol, genannt.

Die Herstellung der erfindungsgemäßen Mittel aus den Komponenten A) und B) und gegebenenfalls C) und D) kann in an sich bekannter Weise erfolgen.

Im allgemeinen beträgt der Anteil der Polymerisatkomponente (Acrylharz) an dem erfindungsgemäßen Mittel, d. h. der wäßrigen Dispersion bis 50 Gew.-%, vorzugsweise 10 bis 20 Gew.-%, speziell 10 Gew.-%.

Der Gehalt des Tensids gemäß Komponente B) beträgt im allgemeinen 0,1 bis 2 Gew.-%, vorzugsweise 0,8 bis 1,2 Gew.-%, bezogen auf die gesamte wäßrige Dispersion.

Das Entschäumungsmittel gemäß Komponente C) ist gegebenenfalls in Anteilen von 0,01 bis 0,05 Gew.-%, vorzugsweise 0,01 bis 0,06 Gew.-%, bezogen auf die gesamte wäßrige Dispersion vorhanden.

Die wahlweise vorhandene Alkoholkomponente D) macht gewöhnlich bis 5 Gew.-%, vorzugsweise 2 bis 4 Gew.-% der gesamten wäßrigen Dispersion aus.

Zur Herstellung des erfindungsgemäßen Mittels werden die Polymerdispersionen A) zusammen mit den Bestandteilen B) und gegebenenfalls C) und D) vermischt.

Es kann sich als zweckmäßig erweisen, das Entschäumungsmittel als erste Komponente zuzusetzen.

Das Mischen kann in an sich bekannter Weise, d. h. vorteilhaft unter Rühren, z. B. im Rührkessel erfolgen. Die Anwendung der erfindungsgemäßen Mittel wird vorteilhaft auf trockenem, fettfreiem, schmutzfreiem Untergrund erfolgen. Man kann die erfindungsgemäßen Mittel im Verhältnis 1 : 0 bis 1 : 30 mit Wasser verdünnen, vorzugsweise im Verhältnis ca. 1 : 10. Die Auftragung kann beispielsweise einmal oder mehrfach in Abhängigkeit von der verwendeten Auftragsmethode und dem erzielten Effekt durch Sprühen, Spritzen, Fluten, Tauchen, Bepinseln, oder Wischen mit einem feinporigen, offenzelligen Weichschaum geschehen. Während der Trocknungsphase, gegebenenfalls bis zur erfolgten Filmbildung sollte das Auftreten eines Kondensats an der beschichteten Oberfläche vermieden werden.

Bei Bedarf kann in geeigneten zeitlichen Abständen die Beschichtung wiederholt werden.

Im allgemeinen genügt eine Beschichtung, die einem Auftrag von 1-10 g/m² Fläche, vorzugsweise 1-8 g/m², bezogen auf Festsubstanz der Dispersion entspricht.

Die Beschichtung von Kunststoffoberflächen, insbesondere transparenten Kunststoffoberflächen mit den erfindungsgemäßen Mitteln trägt entscheidend zur Lösung der eingangs geschilderten Probleme bei.

Aufgrund des geänderten Benetzungsverhaltens (Benetzungswinkels) des anfallenden Kondenswassers zur beschichteten Oberfläche läuft das Wasser bereits in dünneren Schichten ab und es kommt in stark vermindertem Maße zur Ablösung großer Wassertropfen, die, wie bereits ausgeführt, auf bestimmte Kulturen eine nachteilige bis zerstörende Wirkung ausüben. Insbesondere betroffen sind Blütenpflanzen.

Infolge des größeren Benetzungswinkels der anfallenden Kondenswassertropfen erreicht man den zusätzlichen Nutzen eines erhöhten Lichtdurchtritts, was sich gleichfalls positiv auf die Energiebilanz auswirkt.

Die erfindungsgemäßen Mittel erzeugen auf den beschichteten Oberflächen einen langwirksamen antistatischen Effekt. Die folgenden Beispiele dienen zur Erläuterung der Erfindung.

Beispiel 1

In einem Polymerisationsgefäß (2 l) mit Rückflußkühler und Rührwerk werden 13 g eines Umsetzungsprodukts von 1 Mol Isononylphenol mit 180 Mol Äthylenoxyd, 190 g Äthylacrylat, 60 g Methylmethacrylat, 2,5 g Methacrylsäure in 500 g dest. Wasser emulgiert und die Polymerisation nach Ausschluß des Luftsauerstoffs mit 0,2 g Ammoniumperoxydisulfat, 0,25 g Natriumpyrosulfit und 0,003 75 g Eisen(II)-sulfat gestartet. Nach dem Abklingen der Polymerisation wird der Ansatz auf etwa 30 °C gekühlt und 13 g des oben genannten Emulgators, 190 g Äthylacrylat, 60 g Methylmethacrylat und 2,5 g Methacrylsäure darin emulgiert. Nach Sauerstoffausschluß wird die Polymerisation erneut durch Zugabe von 0,2 g Ammoniumperoxydisulfat und 0,25 g Natriumpyrosulfit in Gang gesetzt. Nach Überschreiten des Temperaturmaximums wird der Ansatz auf Zimmertemperatur abgekühlt, mit wäßrigem Ammoniak auf pH 2,5 eingestellt und über ein feinmaschiges Siebgewebe aus rostfreiem Stahl filtriert.

Es resultiert eine koagulatfreie, feinteilige Dispersion mit einer Viskosität von etwa 5 000 mPa · s. Feststoffgehalt ca. 50 %.

Beispiel 2

In einem Polymerisationsgefäß (2 l) mit Rückflußkühler, Rührwerk und Zulaufgefäß werden 0,50 g Ammoniumperoxydisulfat und 0,65 g eines technischen Emulgators, bestehend aus einem Umsetzungsprodukt aus Tri-isobutylphenol und 7 Mol Äthylenoxyd, das sulfatiert und in das Natrium-Salz übergeführt ist, in 400 g destilliertem Wasser gelöst und auf 80 °C erwärmt. In diese Lösung wird unter Rühren innerhalb 4 Stunden eine zuvor aus 500 g Methylmethacrylat, 490 g Butylacrylat, 10 g Methacrylsäure, 2 g des genannten Emulgators, 1,5 g des genannten Initiators und 600 g destilliertem Wasser hergestellte Emulsion bei 80 °C zugetropft. Der Ansatz wird anschließend 2 Stunden bei 80 °C gehalten, mit wäßrigem Ammoniak auf pH 7,5 eingestellt und gekühlt. Hierauf werden 50 g eines Umsetzungsproduktes von 1 Mol Isononylphenol mit 100 Mol Äthylenoxyd (verdünnt mit der dreifachen Menge Wasser) zugesetzt. Danach wird noch 1 Stunde gerührt, anschließend mit wäßrigem Ammoniak auf pH 9,5-10 eingestellt.

Es resultiert eine gut filtrierbare, feinteilige Dispersion mit einer Viskosität < 1 000 mPa · s., Feststoffgehalt ca. 50 %.

**Beispiel 3**

Herstellung des erfindungsgemäßen Mittels. Zusammensetzung :
Komponente a) 0,5 Gew.-% des Triäthanolammoniumsalzes des Dodecylbenzolsulfonats
Komponente b) 2,0 Gew.-% Isopropanol
Komponente c) 46,0 Gew.-% Acrylharz-Dispersion gemäß Beispiel 1
Komponente d) 51,5 Gew.-% $H_2O$ destilliert
Komponente e) 0,001 Gew.-% Nopco NXZ® als Entschäumer

Man legt die Komponente c) vor, verdünnt unter Rühren mit d) gibt die Komponente b) dazu und anschließend die Komponente e) und gibt abschließend die Komponente a) hinzu.

Für weitere Rezepturen genügt es in der Regel das Acrylharz c) durch ein anderes, erfindungsgemäß geeignetes zu ersetzen.

**Beispiel 4**

Beschichtung von Stegdoppelplatten aus Acrylglas im Dachbereich von Gewächshäusern.

Bei einem montierten Gewächshaus mit Stegdoppelplatten im Dachbereich wird die untere Seite der Stegdoppelplatten zur Beseitigung des Kondenswasserbefalls zunächst abgerakelt, danach bis zur völligen Trocknung belüftet. Anschließend wird das im Verhältnis 1 : 10 mit weichem Wasser (Regenwasser) verdünnte erfindungsgemäße Mittel (gemäß Beispiel 3) mittels eines damit getränkten offenzelligen Weichschaums (ca. 50 cm breit) unter leichtem Druck in nebeneinanderliegenden Bahnen auf die untere Seite der Stegdoppelplatte aufgewischt. Man läßt trocknen bis ein klarer Film entstanden ist. Bei gleichmäßigem Auftrag entsteht ein völlig unsichtbarer Oberflächenfilm.

An der beschichteten Oberfläche unterbleibt die Bildung größerer Tropfen völlig.

**Patentansprüche**

1. Mittel zur flächigen und langwirksamen Beschichtung der Oberflächen von Objekten aus Kunststoff mit antistatischer und beschlagverhindernder Wirkung in Form
A) einer wäßrigen Dispersion eines Acrylharzes mit einer $T_{\lambda max}$ von $\geq 10\,°C$, die höchstens 10 Gew.-%, bezogen auf das gesamte Acrylharz, an wasserlöslichen Monomeren als Comonomere enthalten soll, wovon höchstens die Hälfte aus nicht-stickstoffhaltigen, wasserlöslichen Monomeren bestehen soll, und wobei die Dispersion eine MFT $\geq 5\,°C$ besitzt, die
B) nichtionische und/oder anionische Tenside und gegebenenfalls
C) ein Entschäumungsmittel und gegebenenfalls
D) einen oder mehrere Alkohole enthält.
2. Mittel gemäß Anspruch 1, dadurch gekennzeichnet, daß die Acrylharzdispersion eine MFT von 5 bis 20 °C besitzt.
3. Mittel gemäß den Ansprüchen 1 und 2, dadurch gekennzeichnet, daß das Acrylharz eine $T_{\lambda max}$ von 10-50 °C besitzt.
4. Mittel gemäß den Ansprüchen 1 bis 3, dadurch gekennzeichnet, daß die Transmission (in %) der mit dem erfindungsgemäßen Mittel erzeugten Beschichtung auf Kunststoffoberflächen nach 150-stündiger UV-Belichtung im Xenontest noch 90 % beträgt.

**Claims**

1. Agent for providing a flat and long-lasting coating on the surfaces of plastics objects with an anti-static and non-stick activity in the form of
A) an aqueous dispersion of an acrylic resin having a $T_{\lambda max}$ of $\geq 10\,°C$ which should contain at most 10 % by weight, based on the total acrylic resin, of water-soluble monomers as comonomer, of which at most half should consist of non-nitrogenous, water-soluble monomers, the dispersion having an MFT $\geq 5\,°C$, which contains
B) non-ionic and/or anionic surfactants and optionally
C) an antifoamer and optionally
D) one or more alcohols.
2. Agent as claimed in claim 1, characterised in that the acrylic resin dispersion has an MFT of from 5 to 20 °C.
3. Agent as claimed in claims 1 and 2, characterised in that the acrylic resin has a $T_{\lambda max}$ of from 10-50 °C.
4. Agent as claimed in claims 1 to 3, characterised in that the transmission (in %) of the coating produced with the agent according to the invention on plastics surfaces is still 90 % after 150 hours of UV illumination in the xenon test.

**Revendications**

1. Agent pour l'enduction en couches minces et d'une activité prolongée des surfaces d'objets en matière plastique avec une action antistatique et anticondensation sous la forme
A) d'une dispersion aqueuse d'une résine acrylique ayant une $T_{\lambda max}$ $\geq 10\,°C$, qui doit contenir comme comonomères au maximum 10 % en poids, par rapport à la résine acrylique totale, de monomères solubles dans l'eau, la moitié au maximum de ceux-ci devant être constituée de monomères non azotés, solubles dans l'eau et la dispersion possédant une température maxima de formation de pellicule $\geq 5\,°C$, qui contient
B) des agents tensio-actifs non ioniques et/ou anioniques et le cas échéant
C) un agent anti-mousse et le cas échéant,
D) un ou plusieurs alcools.
2. Agent selon la revendication 1, caractérisé par le fait que la dispersion de résine acrylique possède une température maxima de formation de pellicule de 5 à 20 °C.

3. Agent selon les revendications 1 et 2, caractérisé par le fait que la résine acrylique possède une $T_{\lambda max}$ de 10 à 50 °C.

4. Agent selon les revendications 1 à 3, caractérisé par le fait que la transmission (en %) de l'enduction produite avec les agents conformes à l'invention sur des surfaces de matière plastique est encore de 90 % après une irradiation par les U.V. de 150 heures dans l'essai au xénon.